# EUROPÄISCHE PATENTSCHRIFT

(11) **EP 1 912 824 B1**
(45) Veröffentlichungstag und Bekanntmachung des Hinweises auf die Patenterteilung: **13.01.2010**
(21) Anmeldenummer: 06762604.4
(22) Anmeldetag: 14.07.2006
(51) Int. Cl.: B60N 3/02

(54) **FAHRZEUG-HALTEGRIFF**
VEHICLE GRAB HANDLE
POIGNEE DE MAINTIEN POUR PASSAGER DE VEHICULE

(30) Priorität: 18.07.2005 DE 202005011297 U
(43) Veröffentlichungstag der Anmeldung: 23.04.2008
(73) Patentinhaber: TRW Automotive Electronics & Components GmbH, 78315 Radolfzell (DE); AUDI AG, 85045 Ingolstadt (DE)
(72) Erfinder: BÖHNER, Jan, 85049 Ingolstadt (DE); LOEWE, Hubert, 66919 Wesenberg (DE)
(74) Vertreter: Prinz & Partner
(86) Internationale Anmeldenummer: PCT/EP2006/006925
(87) Internationale Veröffentlichungsnummer: WO 2007/009677

(56) Entgegenhaltungen:
- EP-A2- 1 125 790
- DE-U1- 20 310 944
- US-A1- 2002 020 042

## Beschreibung

Die Erfindung betrifft einen Fahrzeug-Haltegriff mit einem Griffstück und wenigstens einem Lagerbock zur Befestigung des Fahrzeug-Haltegriffs an einer Fahrzeugkarosserie, wobei ein Lagerabschnitt des Griffstücks schwenkbar am Lagerbock angebracht ist und wobei am Lagerbock zwei Achsstummel vorgesehen sind, welche eine Schwenkachse für das Griffstück festlegen.

Bisher wird das Griffstück mittels einer Lagerachse schwenkbar am Lagerbock befestigt. Hierbei sind im Griffstück und im Lagerbock Öffnungen für die Lagerachse vorgesehen, die im montierten Zustand von außen sichtbar sind, was die Optik beeinträchtigt. Außerdem ist die Montage von Einbauelementen wie Rückstellfedern oder Dämpfern erschwert. Ein solcher Fahrzeug-Haltegriff ist beispielsweise in der EP 1 125 790A2 beschreiben.

Demgegenüber offenbart die DE 203 10 944 U1 einen verbesserten Fahrzeug-Haltegriff, bei dem die Lagerachse einstückig mit dem Lagerbock ausgeführt und in einen Lagerabschnitt des Griffstücks drehbar eingegossen ist. Bei einem derartigen Haltegriff wirken die einzelnen Bauteile paßgenau zusammen, es ist keinerlei Spiel zwischen dem Griffstück und dem Lagerbock vorhanden. Dies kann zu Problemen bei der Montage des Fahrzeug-Haltegriffs an einer Fahrzeugkarosserie führen, da die karosserieseitige Befestigungsvorrichtung für den Fahrzeug-Haltegriff im allgemeinen gewisse Toleranzen aufweist.

Die gattungsgemäße US 2002/020042 A1 zeigt einen Fahrzeug-Haltegriff mit zwei Lagerböcken und einem Griffstück. An jedem Lagerbock sind zwei Achsstummel angeformt, die eine Schwenkachse für das Griffstück des Fahrzeug-Haltegriffs definieren. Im Griffstück sind zylindrische Aussparungen vorgesehen, die bei einer Montage des Griffstücks zunächst koaxial mit den Achsstummeln ausgerichtet werden. Durch eine axiale Bewegung des Griffstücks relativ zum Lagerbock werden die Achsstummel in die Aussparungen eingeführt, wodurch das Griffstück und der Lagerbock schwenkbar miteinander verbunden sind.

Die Erfindung schafft nun einen Fahrzeug-Haltegriff gemäß dem Oberbegriff des Anspruchs 1, bei dem die beiden Achsstummel relativ zum Lagerbock längs der Schwenkachse aus einer Grundstellung in eine Verbindungsstellung verschiebbar sind, wobei die Achsstummel in der Verbindungsstellung das Griffstück und den Lagerbock miteinander koppeln. Durch die Achsstummel wird somit eine einfache und zuverlässige schwenkbare Verbindung zwischen Griffstück und Lagerbock geschaffen.

In der Grundstellung der Achsstummel kann der Lagerbock zwischen zwei Lageraugen des Griffstücks bewegt werden. Somit können Lagerbock und Griffstück relativ zueinander in eine Montageposition bewegt werden.

Die Achsstummel in der Grundstellung bilden in einer Ausführungsform mit dem Lagerbock eine vormontierte Einheit und sind am Lagerbock gegen Verlieren gesichert. Dies erleichtert die Montage erheblich und reduziert die Anzahl der vor Ort zu montierenden Einzelteile.

Bevorzugt weist der Lagerabschnitt des Griffstücks Ausnehmungen auf, in welche die Achsstummel in der Verbindungsstellung eingreifen. Die schwenkbare Verbindung ist dadurch sehr leicht herstellbar.

Darüber hinaus ist es möglich, daß die Ausnehmungen eine Umfangswand zur Führung der Achsstummel und einen Boden zur Begrenzung der axialen Verschiebung der Achsstummel aufweisen. Die Achsstummel sind in diesem Fall infolge von Herstellungstoleranzen mit einem gewissen Spiel geführt und durch den Boden der Ausnehmungen in ihrer axialen Verschiebung so begrenzt, daß eine Bewegung der Achsstummel aus der Grundstellung über die Verbindungsstellung hinaus nicht möglich ist.

In einer besonders bevorzugten Ausführungsform weist der Lagerbock ein zwischen den beiden Achsstummeln liegendes Einbauelement auf, welches die Achsstummel in der Verbindungsstellung verriegelt. Das Einbauelement verhindert somit nach seiner Montage eine Bewegung der Achsstummel zurück in Richtung der Grundstellung und somit ein ungewolltes Lösen der schwenkbaren Verbindung zwischen dem Griffstück und dem Lagerbock.

Das Einbauelement kann in diesem Fall ein Federgehäuse oder ein Dämpfer sein. Derartige Einbauelemente werden in der Regel in den heutigen Fahrzeug-Haltegriffen sowieso eingebaut und übernehmen erfindungsgemäß zusätzlich eine Verriegelungsfunktion für die Achsstummel. Außerdem ist das Federgehäuse einer Rückstellfeder oder der Dämpfer bevorzugt so eingebaut, daß die Achse der Rückstellfeder oder des Dämpfers nahe der Schwenkachse liegt. Dies ist erfindungsgemäß automatisch gegeben, da die Einbauelemente zwischen den beiden Achsstummeln und somit auf der Schwenkachse liegen.

In einer weiteren Ausführungsform sind zur Befestigung des Fahrzeug-Haltegriffs zwei Lagerböcke mit jeweils einem Einbauelement vorgesehen, wobei die Einbauelemente identische äußere Abmessungen aufweisen. Damit können zum einen die beiden Lagerböcke baugleich ausgeführt und zum anderen die Einbauelemente willkürlich in den Lagerböcken verbaut werden. Dies reduziert die Anzahl der unterschiedlichen Bauteile und erleichtert die Montage.

In einer weiteren Ausführungsform können der Lagerbock und die Achsstummel als Zwei-Komponenten-Spritzgußeinheit hergestellt sein. Dies reduziert den Herstellungsaufwand, da die Lagerböcke und die Achsstummel nicht separat hergestellt und anschließend zusammengefügt werden müssen.

Weitere Merkmale und Vorteile der Erfindung ergeben sich aus der folgenden Beschreibung einer bevorzugten Ausführungsform und aus den beigefügten Zeichnungen, auf die Bezug genommen wird. In den Zeichnungen zeigen:
- Figur 1 eine Explosionsansicht des erfindungsgemäßen Fahrzeug-Haltegriffs;
- Figuren 2a-c perspektivische Detailansichten der Montage des Lagerbocks an das Griffstück des erfindungsgemäßen Fahrzeug-Haltegriffs;
- Figuren 3a und 3b perspektivische Detailansichten der Montage des Federgehäuses in den erfindungsgemäßen Fahrzeug-Haltegriff;
- Figuren 4a und 4b perspektivische Detailansichten der Montage des Dämpfers in den erfindungsgemäßen Fahrzeug-Haltegriff;
- Figuren 5a und 5b perspektivische Detailansichten der Montage der Metallklammer in den Lagerbock des erfindungsgemäßen Fahrzeug-Haltegrifts;
- Figuren 6a-c perspektivische Detailansichten der Montage des Sicherungselements für den erfindungsgemäßen Fahrzeug-Haltegriff; und
- Figur 7 eine perspektivische Ansicht des erfindungsgemäßen Fahrzeug-Haltegriffs im Einbauzustand.

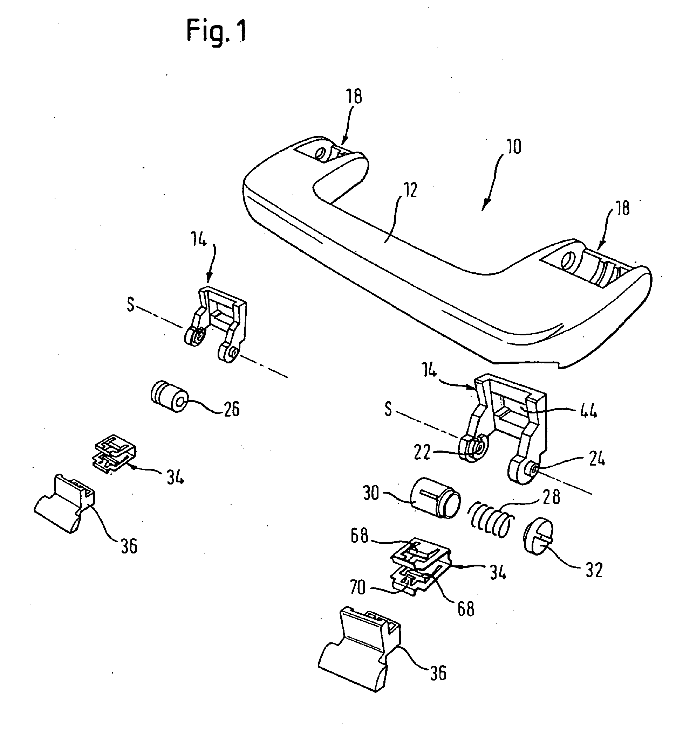

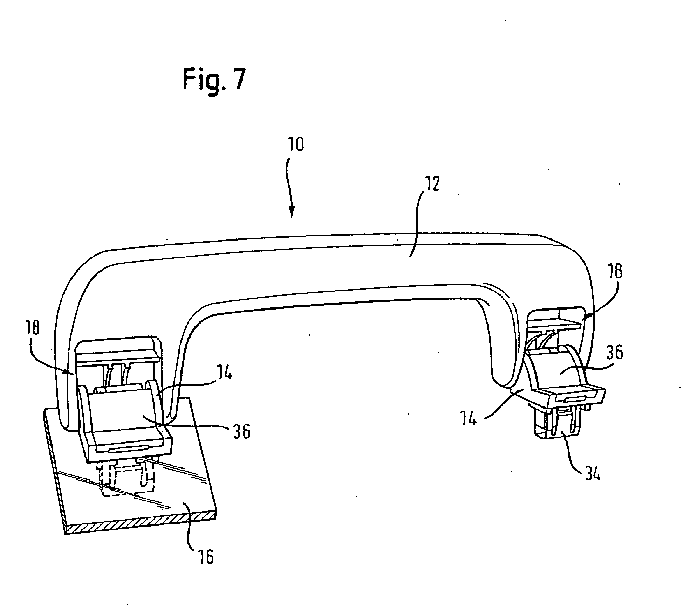

Die Figur 1 zeigt einen Fahrzeug-Haltegriff 10 mit einem Griffstück 12 und zwei Lagerböcken 14 zur Befestigung des Fahrzeug-Haltegriffs 10 an einer Fahrzeugkarosserie 16 (siehe Fig. 7). Das Griffstück 12 besteht genau wie die Lagerböcke 14 aus Kunststoff. Es ist im vorliegenden Fall einstückig ausgebildet und weist zwei Lagerabschnitte 18 auf, durch die das Griffstück 12 schwenkbar an den Lagerböcken 14 angebracht ist. In anderen Ausführungsformen ist das Griffstück mehrteilig ausgebildet, beispielsweise mit zwei separaten Lagerabschnitten, die mit einem Mittelteil verklebt, verschweißt, verklippst, verschraubt oder verstiftet sind.

Am Lagerbock 14 sind zwei Achsstummel 22, 24 vorgesehen, welche eine Schwenkachse S für das Griffstück 12 festlegen und längs dieser Schwenkachse S verschiebbar sind.

Ferner ist in der Figur 1 ein Dämpfer 26 sowie eine Rückstellfeder 28 mit einem Federgehäuse 30, 32 zu sehen. Die Rückstellfeder 28 ist im montierten Zustand komplett vom Federgehäuse 30, 32 umgeben. Das Federgehäuse 30, 32 und der Dämpfer 26 werden im folgenden auch als Einbauelemente bezeichnet.

Außerdem sind zwei Metallklammern 34 dargestellt, mit welchen die Lagerböcke 14 an der Fahrzeugkarosserie 16 befestigt sind.

Weiter sind zwei Sicherungselemente 36 vorhanden, die ein Lösen der Verbindung zwischen den Metallklammern 34 und der Fahrzeugkarosserie 16 verhindern.

Bis auf das jeweilige Einbauelement sind die Bauteile vollkommen identisch, so daß in den folgenden Detailansichten lediglich ein Lagerabschnitt 18 des Fahrzeug-Haltegriffs 10 gezeigt ist. Da die Einbauelemente identische äußere Abmessungen aufweisen, ist der Montagevorgang für beide Lagerböcke 14 gleich.

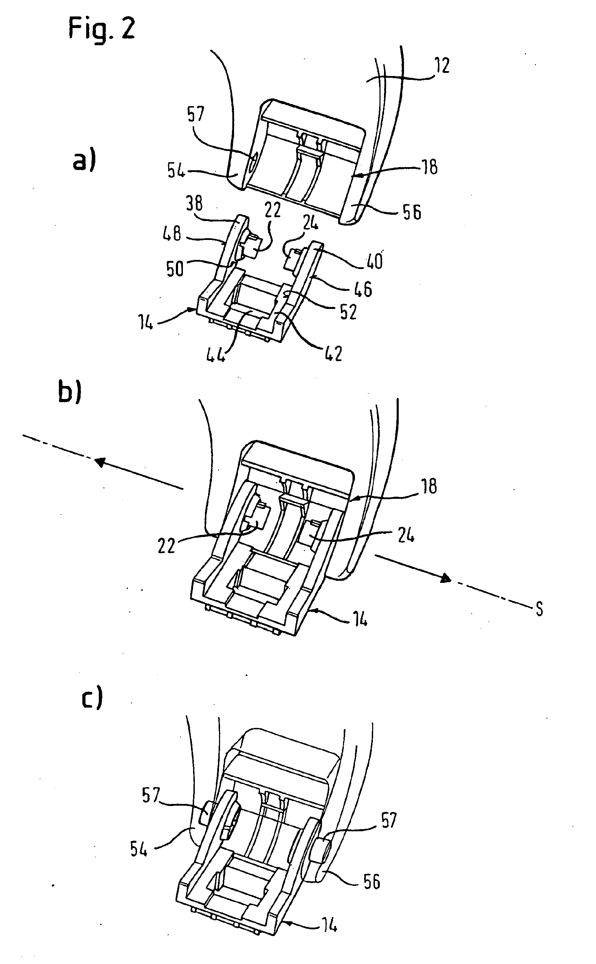

Die Figur 2a zeigt den Lagerabschnitt 18 des Griffstücks 12 sowie den Lagerbock 14. Der Lagerbock 14 ist im wesentlichen U-förmig ausgeführt, mit einander gegenüberliegenden Seitenwangen 38, 40, die durch einen Lagerbockboden 42 einstückig verbunden sind, wobei der Lagerbockboden 42 eine Montageöffnung 44 aufweist. Am Lagerbock 14 sind die beiden Achsstummel 22, 24 vorgesehen, welche die Schwenkachse S für das Griffstück 12 festlegen. Genauer gesagt sind die Achsstummel 22, 24 jeweils in einer Öffnung der Seitenwangen 38, 40 des Lagerbocks 14 gehalten. Die Achsstummel 22, 24 bilden mit dem Lagerbock 14 eine vormontierte Einheit und sind am Lagerbock 14 gegen Verlieren gesichert. Im vorliegenden Fall drücken Klemmvorsprünge am Umfangsrand der Öffnungen der Seitenwangen 38, 40 radial gegen die Achsstummel 22, 24, sichern diese somit gegen Verlieren und positionieren sie in die nach innen verschobene Grundstellung. Die Achsstummel 22, 24 bleiben nach Überwinden der Kraft der Klemmvorsprünge aber längs der Schwenkachse S verschiebbar.

In der Figur 2a befinden sich die Achsstummel 22, 24 in der Grundstellung, bei der die Achsstummel 22, 24 bündig mit einer jeweiligen Außenfläche 46, 48 der Seitenwangen 38, 40 abschließen und jeweils an einer Innenfläche 50, 52 der Seitenwangen 38, 40 des U-förmigen Lagerbocks 14 überstehen. In dieser Grundstellung der Achsstummel 22, 24 ist der Lagerbock 14 zwischen zwei Lageraugen 54, 56 des Griffstücks 12 bewegbar, wobei in den Lageraugen Ausnehmungen 57 gebildet sind.

Der Lagerbock 14 ist in der Figur 2b so ausgerichtet, daß die Achsstummel 22, 24 und die Ausnehmungen 57 der Lageraugen 54, 56 auf der Schwenkachse S liegen. Die Achsstummel 22, 24 werden jeweils in Pfeilrichtung nach außen gedrückt, bis sie mit der jeweiligen Innenfläche 50, 52 der Seitenwangen 38, 40 bündig sind. Dabei greifen die Achsstummel 22, 24 in die Ausnehmungen 57 der Lageraugen 54, 56 ein, so daß in der Verbindungsstellung (Figur 2c) das Griffstück 12 mit dem Lagerbock 14 gekoppelt ist. Die Ausnehmungen 57 weisen dabei eine Umfangswand zur Führung der Achsstummel 22, 24 und einen Boden zur Begrenzung der axialen Verschiebung der Achsstummel 22, 24 auf. In der Figur 2c ist das Griffstück 12 transparent dargestellt, so daß die Ausnehmungen 57 gut sichtbar sind. Infolge von Herstellungstoleranzen ergibt sich ein gewisses Spiel zwischen den Achsstummeln 22, 24 und der Umfangswand der Ausnehmungen 57. Das Spiel ist in diesem Fall gewünscht, um eine problemlose Montage des Fahrzeug-Haltegriffs 10 an der Karosserie 16 zu gewährleisten. Durch die Ausbildung des Bodens ist die axiale Verschiebung der Achsstummel 22, 24 begrenzt, so daß keine Verschiebung der Achsstummel 22, 24 aus der Grundstellung über die Verbindungsstellung hinaus erfolgen kann. Vorzugsweise ist der Boden der Ausnehmung 57 geschlossen, so daß von außen keine Öffnungen für die Achsstummel 22, 24 zu sehen sind und die Optik nicht beeinträchtigt ist.

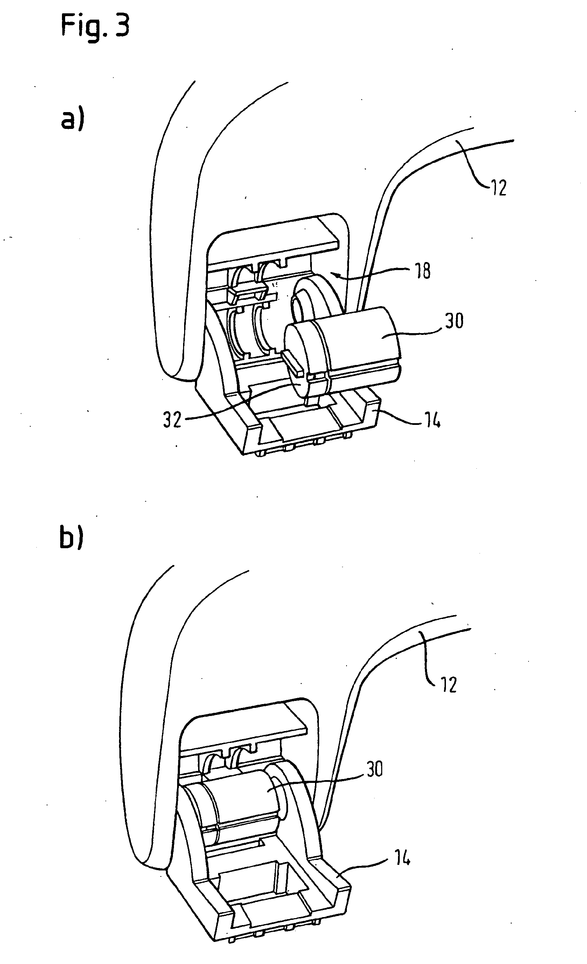

Wie in Figur 3a ersichtlich, wird im folgenden zwischen die beiden Achsstummel 22, 24 des Lagerbocks 14 das Einbauelement eingeführt, welches die Achsstummel 22, 24 in der Verbindungsstellung verriegelt (Figur 3b). Vorzugsweise befinden sich die Achsstummel 22, 24 bereits in ihrer Verbindungsstellung, wenn das Einbauelement zur Verriegelung der Achsstummel 22, 24 radial zwischen die Achsstummel 22, 24 geschoben wird. Alternativ ist jedoch auch denkbar, daß das Einbauelement so ausgebildet ist, daß es bei seiner Montage die Achsstummel 22, 24 aus der Grundstellung in ihre Verbindungsstellung bewegt.

In den Figuren 3a und b ist das Einbauelement das Federgehäuse 30, 32. Das Federgehäuse 30, 32 ist so ausgebildet, daß es in seiner Einbauposition gemäß Figur 3b in seiner Lage fixiert ist, z.B. im Lagerbock 14 einrastet, und die Rückstellfunktion des Fahrzeug-Haltegriffs 10 übernimmt. Die Achsstummel 22, 24 sind somit einerseits durch den Boden der Ausnehmungen 57 im Griffstück 12 und andererseits durch das Federgehäuse 30, 32 in axialer Richtung fixiert.

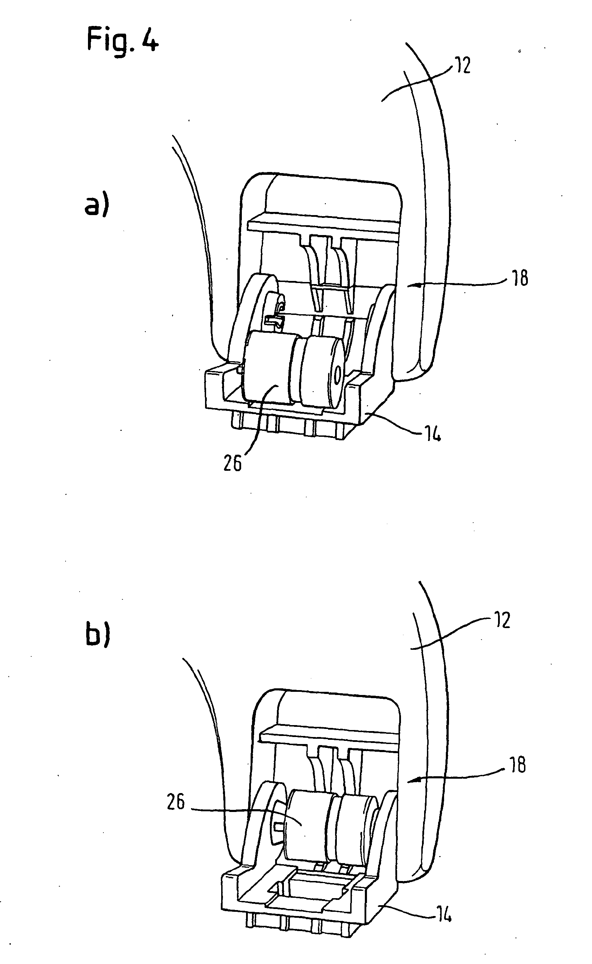

Die Figuren 4a und b zeigen den Einbau des Dämpfer 26, der analog zum Einbau des Federgehäuses 30, 32 gemäß den Figuren 3a und b erfolgt. Genau wie das Federgehäuse 32 verrastet auch das als Dämpfer 26 ausgebildete Einbauelement im Lagerbock 14, wenn es zur Verriegelung der Achsstummel 22, 24 zwischen die Achsstummel 22, 24 geschoben wird.

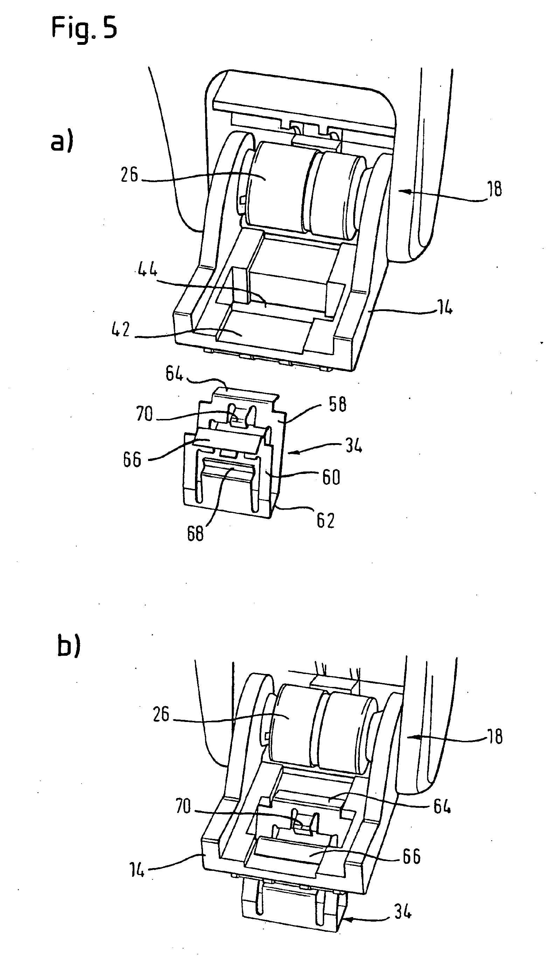

Die Figuren 5a und b geben die Montage der Metallklammer 34 wieder. Die U-förmige Metallklammer 34 weist zwei gegenüberliegende Seitenwände 58, 60 auf, die durch einen Steg 62 miteinander verbunden sind. An der dem Steg 62 gegenüberliegenden Seite sind die Seitenwände 58, 60 der Metallklammer 34 so nach außen abgewinkelt, daß zwei Lappen 64, 66 entstehen. Die Lappen 64, 66 sind im wesentlichen parallel zum Steg 62 und voneinander weg gerichtet. Ferner weisen die Seitenwände 58, 60 jeweils eine freigestanzte Rastzunge 68 und jeweils eine Rastnase 70 am oberen Ende der Rastzunge 68 auf, die im folgenden weiter beschrieben werden. Der Bereich der Metallklammer 34, in dem Rastelemente wie die Rastzunge 68 oder die Rastnase 70 angeordnet sind wird allgemein auch als Rastabschnitt der Metallklammer 34 bezeichnet. Das bevorzugte Material zur Ausbildung der Metallklammer 34 ist Federblech.

In Figur 5b ist die Metallklammer 34 in die Montageöffnung 44 des Lagerbocks 14 eingeführt und lagesicher gehalten, so daß die Metallklammer 34 und der Lagerbock 14 für die weitere Montage richtig zueinander positioniert sind. Die Lappen 64, 66 der Metallklammer 34 liegen in dieser vormontierten Position an den Rändern der Montageöffnung 44, also am Lagerbockboden 42, an. Vorzugsweise sind die Rastzungen 68 der Metallklammer 34 so ausgebildet, daß sie die Metallklammer 34 im Lagerbock 14 vorverrasten und in ihrer Lage sichern.

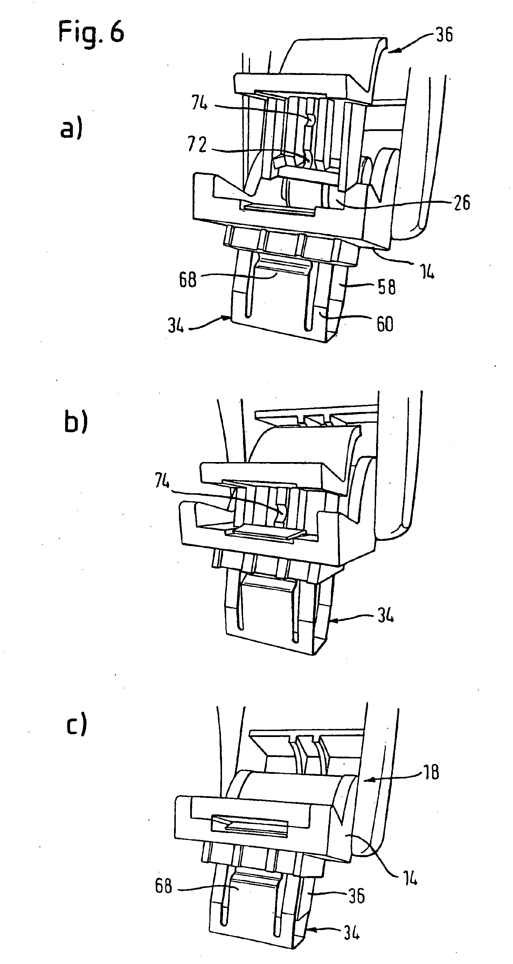

In einem weiteren Montageschritt gemäß den Figuren 6a-c wird das Sicherungselement 36 montiert. Das Sicherungselement 36 weist eine erste Kerbe 72 und eine zweite Kerbe 74 auf und wird ebenfalls in die Montageöffnung 44 des Lagerbocks 14 eingeführt. Dabei wird das Sicherungselement 36 zwischen die Seitenwände 58, 60 der Metallklammer 34 gedrückt.

In einer Vormontageposition (Figur 6b) bilden die Metallklammer 34 und das Sicherungselement 36 eine Formschlußverbindung aus, wodurch das Sicherungselement 36 relativ zur Metallklammer 34 fixiert ist. In der vorliegenden Ausführungsform schnappen die Rastnasen 70 (siehe Figur 5) der Seitenwände 58, 60 der Metallklammer 34 zur Bildung dieser Formschlußverbindung in die erste Kerbe 72 des Sicherungselements 36 ein. Damit ergibt sich ein vormontierter Zustand des gesamten Fahrzeug-Haltegriffs gemäß Figur 6b, der auch einem Anlieferzustand des Fahrzeug-Haltegriffs 10 entspricht.

Danach werden der Lagerbock 14 bzw. die beiden Lagerböcke 14 des Fahrzeug-Haltegriffs 10 nach Figur 1 in geeignete Montageöffnungen der Fahrzeugkarosserie 16 gedrückt, wodurch sich die Rastzungen 68 nach innen, d.h. aufeinander zu bewegen, bis sie in der Fahrzeugkarosserie 16 wieder nach außen schnappen und einrasten. Um bei einer stärkeren Belastung des Fahrzeug-Haltegriffs 10 ein Lösen der Rastverbindung zwischen der Metallklammer 34 und der Fahrzeugkarosserie 16 zu vermeiden, werden die Rastzungen 68 der Seitenwände 58, 60 der Metallklammer 34 in ihrer verrasteten Stellung durch das Sicherungselement 36 aus Kunststoff verriegelt. Hierzu wird das Sicherungselement 36 weiter in Richtung zum Steg 62 der Metallklammer 34 gedrückt, bis die Metallklammer 34 mit dem Sicherungselement 36 eine weitere Formschlußverbindung ausbildet, wodurch das Sicherungselement 36 relativ zur Metallklammer 34 in einer Verriegelungsposition fixiert ist (Fig. 6c). Zur Bildung dieser Formschlußverbindung schnappt die Rastnase 70 der Metallklammer 34 in die zweite Kerbe 74 des Sicherungselements 36. Die Rastzungen 68 der Metallklammer 34 zur Befestigung des Fahrzeug-Haltegriffs 10 an der Fahrzeugkarosserie 16 werden vom Sicherungselement 36 nach außen in die verrastete Stellung gedrückt bzw. dort gehalten. Eine Bewegung der Rastzungen 68 aufeinander zu wird vom Sicherungselement 36 verhindert.

Die Verbindung zwischen dem Fahrzeug-Haltegriff 10 und der Fahrzeugkarosserie 16 ist somit hoch belastbar und aufgrund der Verwendung einer Metallklammer auch sehr dauerhaft. Bei kunststoffverklippsten Griffen läßt die Qualität der Verbindung aufgrund des Relaxationsverhaltens von Kunststoff mit der Zeit nach.

Die Figur 7 zeigt den kompletten Fahrzeug-Haltegriff 10 fertigt montiert an der Fahrzeugkarosserie 16, die nur am linken Lagerbock 14 schematisch dargestellt ist.

## Patentansprüche

1. Fahrzeug-Haltegriff (10) mit einem Griffstück (12) und wenigstens einem Lagerbock (14) zur Befestigung des Fahrzeug-Haltegriffs (10) an einer Fahrzeugkarosserie (16), wobei ein Lagerabschnitt (18) des Griffstücks (12) schwenkbar am Lagerbock (14) angebracht ist und wobei am Lagerbock (14) zwei Achsstummel (22, 24) vorgesehen sind, welche eine Schwenkachse (S) für das Griffstück (12) festlegen, **dadurch gekennzeichnet, dass** die beiden Achsstummel (22, 24) relativ zum Lagerbock (14) längs dieser Schwenkachse (S) aus einer Grundstellung in eine Verbindungsstellung verschiebbar sind, in der die Achsstummel (22, 24) das Griffstück (12) und den Lagerbock (14) miteinander koppeln.

2. Fahrzeug-Haltegriff (10) nach Anspruch 1, **dadurch gekennzeichnet, daß** der Lagerbock (14) in der Grundstellung der Achsstummel (22, 24) zwischen zwei Lageraugen (54, 56) des Griffstücks (12) bewegbar ist.

3. Fahrzeug-Haltegriff (10) nach Anspruch 1 oder 2, **dadurch gekennzeichnet, daß** die Achsstummel (22, 24) in der Grundstellung mit dem Lagerbock (14) eine vormontierte Einheit bilden und am Lagerbock (14) gegen Verlieren gesichert sind.

4. Fahrzeug-Haltegriff (10) nach einem der vorhergehenden Ansprüche, **dadurch gekennzeichnet, daß** der Lagerabschnitt (18) des Griffstücks (12) Ausnehmungen aufweist, in welche die Achsstummel (22, 24) in der Verbindungsstellung eingreifen.

5. Fahrzeug-Haltegriff (10) nach Anspruch 4, **dadurch gekennzeichnet, daß** die Ausnehmungen eine Umfangswand zur Führung der Achsstummel (22, 24) und einen Boden zur Begrenzung der axialen Verschiebung der Achsstummel (22, 24) aufweisen.

6. Fahrzeug-Haltegriff (10) nach Anspruch 4 oder 5, **dadurch gekennzeichnet, daß** der Lagerbock (14) ein zwischen den beiden Achsstummeln (22, 24) liegendes Einbauelement aufweist, welches die Achsstummel (22, 24) in der Verbindungsstellung verriegelt.

7. Fahrzeug-Haltegriff (10) nach Anspruch 6, **dadurch gekennzeichnet, daß** das Einbauelement ein Federgehäuse (30, 32) oder ein Dämpfer (26) ist.

8. Fahrzeug-Haltegriff (10) nach einem der vorhergehenden Ansprüche, **dadurch gekennzeichnet, daß** zwei Lagerböcke (14) mit jeweils einem Einbauelement zur Befestigung des Fahrzeug-Haltegriffs (10) vorgesehen sind, wobei die Einbauelemente identische äußere Abmessungen aufweisen.

9. Fahrzeug-Haltegriff nach einem der vorhergehenden Ansprüche, **dadurch gekennzeichnet, daß** der Lagerbock (14) und die Achsstummel (22, 24) als 2-Komponenten-Spritzgußeinheit hergestellt sind.

## Claims

1. A vehicle grab handle (10) comprising a handle (12) and at least one bearing support (14) for attaching the vehicle grab handle (10) to a vehicle body (16), a bearing section (18) of the handle (12) being pivotally mounted to the bearing support (14) and two shaft stubs (22, 24) being provided on the bearing support (14) which define a pivot axis (S) for the handle (12), **characterised in that** the two shaft stubs (22, 24) can be shifted in relation to the bearing support (14) along this pivot axis (S) from an initial position to a connection position, in which the shaft stubs (22, 24) couple the handle (12) and the bearing support (14) to one another.

2. The vehicle grab handle (10) according to claim 1, **characterised in that** in the initial position of the shaft stubs (22, 24), the bearing support (14) is movable between two bearing lugs (54, 56) of the handle (12).

3. The vehicle grab handle (10) according to claim 1 or 2, **characterised in that** in the initial position, the shaft stubs (22, 24) form a preassembled unit with the bearing support (14) and are secured against release on the bearing support (14).

4. The vehicle grab handle (10) according to any of the preceding claims, **characterised in that** the bearing section (18) of the handle (12) has recesses in which the shaft stubs (22, 24) engage in the connection position.

5. The vehicle grab handle (10) according to claim 4, **characterised in that** the recesses have a circumferential wall for guiding the shaft stubs (22, 24) and a base for limiting the axial displacement of the shaft stubs (22, 24).

6. The vehicle grab handle (10) according to claim 4 or 5, **characterised in that** the bearing support (14) has an installation element located between the two shaft stubs (22, 24) which locks the shaft stubs (22, 24) in the connection position.

7. The vehicle grab handle (10) according to claim 6, **characterised in that** the installation element is a spring housing (30, 32) or a damper (26).

8. The vehicle grab handle (10) according to any of the preceding claims, **characterised in that** two bearing supports (14), each including an installation element, are provided for attaching the vehicle grab handle (10), the installation elements having identical external dimensions.

9. The vehicle grab handle according to any of the preceding claims, **characterised in that** the bearing support (14) and the shaft stubs (22, 24) are produced as a two-component injection moulded unit.

## Revendications

1. Poignée de maintien de véhicule (10) comportant une pièce de poignée (12) et au moins un support de palier (14) pour la fixation de la poignée de maintien de véhicule (10) sur une carrosserie de véhicule (16), un tronçon de palier (18) de la pièce de poignée (12) étant monté pivotable sur le support de palier (14) et deux bouts de tige (22, 24) étant prévus sur le support de palier (14) et déterminant un axe de pivotement (S) pour la pièce de poignée (12), **caractérisée en ce que** les deux bouts de tige (22, 24) peuvent être déplacés par rapport au support de palier (14) et le long de cet axe de pivotement (S) depuis une position initiale vers une position de raccordement dans laquelle les bouts de tige (22, 24) relient la pièce de poignée (12) et le support de palier (14).

2. Poignée de maintien de véhicule (10) selon la revendication 1, **caractérisée en ce que** dans la position initiale des bouts de tige (22, 24), le support de palier (14) peut être déplacé entre deux oeillets de palier (54, 56) de la pièce de poignée (12).

3. Poignée de maintien de véhicule (10) selon la revendication 1 ou 2, **caractérisée en ce que** dans la position initiale, les bouts de tige (22, 24) forment une unité préassemblée avec le support de palier (14) et sont bloqués contre un détachement sur le support de palier (14).

4. Poignée de maintien de véhicule (10) selon l'une des revendications précédentes, **caractérisée en ce que** le tronçon de palier (18) de la pièce de poignée (12) présente des évidements dans lesquels s'engagent les bouts de tige (22, 24) dans la position de raccordement.

5. Poignée de maintien de véhicule (10) selon la revendication 4, **caractérisée en ce que** les évidements présentent une paroi périphérique pour le guidage des bouts de tige (22, 24) ainsi qu'un fond pour limiter le déplacement axial des bouts de tige (22,24).

6. Poignée de maintien de véhicule (10) selon la revendication 4 ou 5, **caractérisée en ce que** le support de palier (14) présente un élément de montage qui est agencé entre les deux bouts de tige (22, 24) et verrouille les bouts de tige (22, 24) dans la positon de raccordement.

7. Poignée de maintien de véhicule (10) selon la revendication 6, **caractérisée en ce que** l'élément de montage est un boîtier de ressort (30, 32) ou un amortisseur (26).

8. Poignée de maintien de véhicule (10) selon l'une des revendications précédentes, **caractérisée en ce qu'**il est prévu deux supports de palier (14) comportant chacun un élément de montage pour la fixation de la poignée de maintien de véhicule (10), les éléments de montage présentant des dimensions extérieures identiques.

9. Poignée de maintien de véhicule selon l'une des revendications précédentes, **caractérisé en ce que** le support de palier (14) et les bouts de tige (22, 24) sont réalisés sous forme d'unité moulée par injection à deux composants.
